# FASCICULE DE BREVET EUROPEEN

(11) **EP 3 428 203 B1**
(45) Date de publication et mention de la délivrance du brevet: **27.04.2022**
(21) Numéro de dépôt: 18191182.7
(22) Date de dépôt: 22.07.2014
(51) Int. Cl.: C08F 132/02, C08F 2/42, C08F 4/619

(54) **POLYMERES HYDROCARBONES A GROUPEMENT TERMINAL ALCOXYSILANE**
KOHLENWASSERSTOFFPOLYMERE MIT ALCOXYSILAN-ENDGRUPPE
HYDROCARBON POLYMERS WITH ALKOXYSILANE TERMINAL GROUP

(30) Priorité: 23.07.2013 FR 1357241
(43) Date de publication de la demande: 16.01.2019
(62) Demande divisionnaire de: 14790156.5
(73) Titulaire: Bostik SA, 92700 Colombes (FR)
(72) Inventeur: MICHAUD, Guillaume, 60200 Compiegne (FR); SIMON, Frédéric, 60400 Pont L'Eveque (FR); FOUQUAY, Stéphane, 76130 Mont Saint-Aignan (FR); DIALLO, Abdou Khadri, Trois-Rivieres, G9A 6G7 (CA); GUILLAUME, Sophie, 35500 Vitre (FR); CARPENTIER, Jean-François, 35690 Acigne (FR)
(74) Mandataire: Arkema Patent

(56) Documents cités:
- EP-A2- 0 739 910
- WO-A1-00/46257
- CA-A1- 2 242 060
- DE-A1- 4 337 191
- CEZARY PIETRASZUK ET AL: "Metathesis of Vinyl-Substituted Silicon Compounds with Dienes and Cycloalkenes", ADVANCED SYNTHESIS & CATALYSIS, vol. 344, no. 6-7, 1 août 2002 (2002-08-01), page 789, XP055346174, DE ISSN: 1615-4150, DOI: 10.1002/1615-4169(200208)344:6/7<789::AID- ADSC789>3.0.CO;2-D

## Description

La présente invention a pour objet des polymères hydrocarbonés comprenant un groupement terminal alcoxysilane (aussi appelés polymères hydrocarbonés à groupement terminal alcoxysilane), leur préparation et leur utilisation.

L'invention concerne aussi l'utilisation de ces polymères hydrocarbonés en tant qu'additifs, par exemple en tant que promoteur d'adhésion ou plastifiant réactif.

Des polymères comprenant deux groupes terminaux alcoxysilanes ont fait l'objet de publications. Ainsi, la demande de brevet EP2468783 de la demanderesse décrit un polyuréthane à blocs polyuréthane-polyéther et polyuréthane-polyester avec au moins deux blocs terminaux polyuréthane-polyester reliés à un groupe terminal alcoxysilane. Le mélange de ce polymère difonctionnel à un catalyseur de réticulation conduit à la réalisation d'une composition adhésive de type joint adhésif de polymère modifié silane (ou MS pour « *Modified Silane* » en anglais). Cependant aucun polymère monofonctionnel à groupement terminal alcoxysilane n'est décrit.

D'autre part, la demande de brevet CA 2 242 060 décrit la possibilité d'employer une composition de type joint adhésif à base de polymère renfermant au moins une cyclooléfine, un catalyseur pour la polymérisation par métathèse avec ouverture de chaîne, une charge et un silane.

Cependant, en pratique, ce document ne porte pas sur la fabrication de polymères comprenant un groupement terminal silane. Ainsi, l'unique exemple décrit la fabrication d'un polymère par mélange à chaud (60 °C) en 35 minutes d'une composition comprenant un catalyseur comportant du ruthénium, une charge (wollastonite), et trois constituants qui sont du polynorbornène thermoplastique, du dicyclopentadiène et du vinyltriméthoxysilane (VTMS). Le VTMS est utilisé en tant que promoteur d'adhésion et/ou agent d'aide au séchage. Le rapport molaire du VTMS sur le dicyclopentadiène est égal à environ 1,16%. Le rapport molaire du catalyseur sur le dicyclopentadiène est d'environ 0,08%. Le polymère obtenu par cette synthèse est ensuite réticulé (« *cured* ») à haute température (paliers de 80 °C à 150 °C) pendant 7 heures.

Du fait de la polymérisation croisée des trois constituants et de la présence du polynorbornène, le polymère issu de cette fabrication comporte une multitude de groupements terminaux silanes distribués de manière aléatoire.

La présente invention a pour but de fournir de nouveaux polymères hydrocarbonés à groupement terminal alcoxysilane, généralement utilisables en tant qu'additifs, de préférence en tant que promoteur d'adhésion ou plastifiant réactif, par exemple dans les adhésifs thermofusibles.

Ainsi, la présente invention, telle que définie dans les revendications 1 à 15, concerne un polymère hydrocarboné à groupement terminal alcoxysilane, ledit polymère hydrocarboné étant de formule (1) : 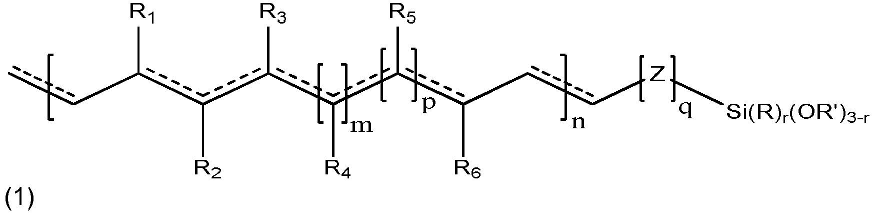 dans laquelle :
- chaque liaison carbone - carbone de la chaîne notée 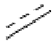 est une double liaison ou une simple liaison, en accord avec les règles de valence de la chimie organique ;
- Les groupes R1, R2, R3, R4, R5 et R6, sont chacun, indépendamment ou non des autres groupes, un hydrogène, un groupe halogéno, un groupe alcoxycarbonyle ou un groupe alkyle, les groupes R1 à R6 pouvant être liés entre eux en tant que membres d'un même cycle ou hétérocycle saturé ou insaturé (i.e. comportant au moins une double liaison carbone - carbone, en incluant les aromatiques), R6 est, indépendamment ou non des autres groupes R1, R2, R3, R4 et R5, un groupe halogéno, un groupe alcoxycarbonyle ou un groupe alkyle,
- m et p sont des nombres entiers compris chacun dans une fourchette allant de 0 à 5, de préférence de 0 à 2, de façon encore plus préférée m et p sont tous deux égaux à 1, la somme m + p étant elle-même comprise dans une fourchette de 0 à 10, de préférence de 0 à 6,
- R et R', identiques ou différents, représentent chacun un groupe alkyle linéaire ou ramifié, de préférence linéaire, comportant de 1 à 4, de préférence de 1 à 2, atomes de carbone,
- Z est un groupe divalent choisi par les groupes alkylènes, interrompus ou non par une fonction ester, et comportant de 1 à 22, de préférence de 1 à 6, atomes de carbone,
- q est un nombre entier égal à 0 ou 1,
- r est un nombre entier égal à 0, 1 ou 2, et
- n est un nombre entier tel que la masse molaire moyenne en nombre Mn du polymère hydrocarboné de formule (1) est comprise dans une fourchette de 400 à 50 000 g/mol, de préférence de 600 à 20 000 g/mol, et la polymolécularité (PDI) du polymère hydrocarboné de formule (1) est comprise dans une fourchette de 1,0 à 2,0, de préférence de 1,25 à 1,55.

Lorsque m = 0, cela veut dire qu'il n'y a pas de groupe entre les crochets auxquels m s'applique et que les deux liaisons carbone - carbone chevauchant chacune un des crochets ne constituent qu'une seule et même liaison carbone - carbone. Lorsque p = 0, cela veut dire qu'il n'y a pas de groupe entre les crochets auxquels p s'applique et que les deux liaisons carbone - carbone chevauchant chacune un des crochets ne constituent qu'une seule et même liaison carbone - carbone. Lorsque q = 0, cela veut dire qu'il n'y a pas de groupe entre les crochets auxquels q s'applique et que les deux liaisons carbone - carbone chevauchant chacune un des crochets ne constituent qu'une seule et même liaison carbone - carbone.

Bien évidemment toutes les formules données ici sont en accord avec les règles de valence de la chimie organique.

Par groupe alkyle, on entend selon l'invention un composé hydrocarboné linéaire ou ramifié, cyclique, acyclique, hétérocyclique ou polycyclique, et comprenant généralement de un à vingt-deux, de préférence de un à quatre, atomes de carbone. Un tel groupe alkyle comprend généralement de 1 à 4, de préférence de 1 à 2, atomes de carbone.

Par groupe halogéno, on entend selon l'invention un groupe iodo, chloro, bromo ou fluoro, de préférence chloro.

Par hétérocycle, on entend selon l'invention un cycle pouvant comprendre un autre atome que le carbone dans la chaîne du cycle, tel que par exemple l'oxygène.

Par groupe alkylène interrompu par une fonction ester, on entend selon l'invention un groupe (divalent) alkylène, linéaire ou ramifié, saturé ou partiellement insaturé, comprenant de un à vingt-deux, de préférence de un à six, atomes de carbone tel qu'une chaîne d'atomes de carbone qu'il comprend peut comporter, en outre, un groupe divalent -COO-.

Par groupe alcoxycarbonyle, on entend selon l'invention on entend selon l'invention un groupe (monovalent) alkyle, linéaire ou ramifié, saturé ou partiellement insaturé, comprenant de un à vingt-deux, de préférence de un à six, atomes de carbone tel qu'une chaîne d'atomes de carbone qu'il comprend peut comporter, en outre, un groupe divalent -COO-.

Par groupe alcoxysilane, on entend selon l'invention un groupe (monovalent) alkyle, linéaire ou ramifié, saturé ou partiellement insaturé, comprenant de un à quatre, de préférence de un à deux, atomes de carbone tel qu'une chaîne d'atomes de carbone qu'il comprend peut comporter, en outre, un groupe divalent -Si-O-.

De préférence, le groupe de formule -[Z]_{q}-Si(R)ᵣ(OR')₃₋ᵣ est choisi parmi :
-Si(OCH₃)₃ (cas où q=0, r = 0, et R' est CH₃) ;
-SiCH₃(OCH₃)₂ (cas où q=0, r = 1, R est CH₃ et R' est CH₃) ;
-CH₂Si(OCH₃)₃ (cas où q=1, Z est CH₂, r = 0 et R' est CH₃) ;
-CH₂SiCH₃(OCH₃)₂ (cas où q=1, Z est CH₂, r = 1, R est CH₃ et R' est CH₃) ;
-CO-O-(CH₂)₃Si(OCH₃)₃) (cas où q=1, Z est CO-O-(CH₂)₃, r = 0 et R' est CH₃) ; et
-CO-O-(CH₂)₃SiCH₃(OCH₃)₂) (cas où q=1, Z est CO-O-(CH₂)₃, r = 1, R est CH₃ et R' est CH₃).

La polymolécularité PDI (ou dispersité *Ð*_{M}) est définie comme le rapport Mw / Mn, c'est-à-dire le rapport de la masse molaire moyenne en poids à la masse molaire moyenne en nombre du polymère.

Les deux masses molaires moyennes Mn et Mw sont mesurées selon l'invention par chromatographie d'exclusion stérique (ou SEC, acronyme de « *Size Exclusion Chromatography* » en anglais), usuellement avec étalonnage PEG (PolyEthylèneGlycol) ou PS (PolyStyrène), de préférence PS.

Par groupement terminal, on entend un groupement situé en bout de chaîne (ou extrémité) du polymère.

S'il est insaturé, le polymère selon l'invention comprend le plus souvent une pluralité de (i.e. plus de deux) doubles liaison carbone-carbone.

Dans un mode de réalisation préféré, le polymère de formule (1) ne comprend qu'une seule double liaison carbone - carbone par unité de répétition [...]ₙ, et le polymère est de formule (1') :

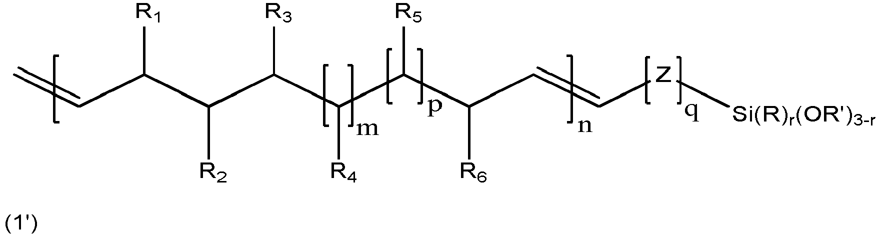

Dans ce cas, de façon préférée, m et p sont égaux à 1.

De préférence, l'invention concerne un polymère hydrocarboné à groupement terminal alcoxysilane, ledit polymère hydrocarboné étant de formule (2) ou de formule (3) : 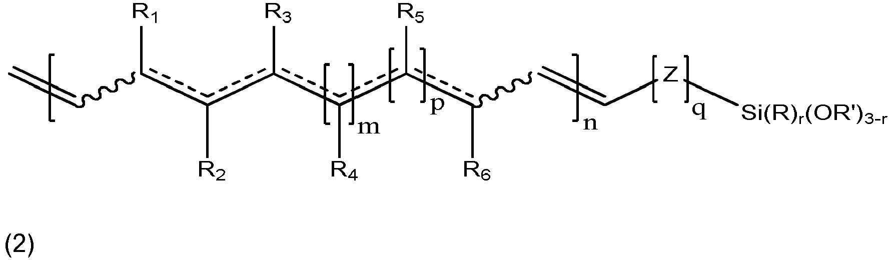 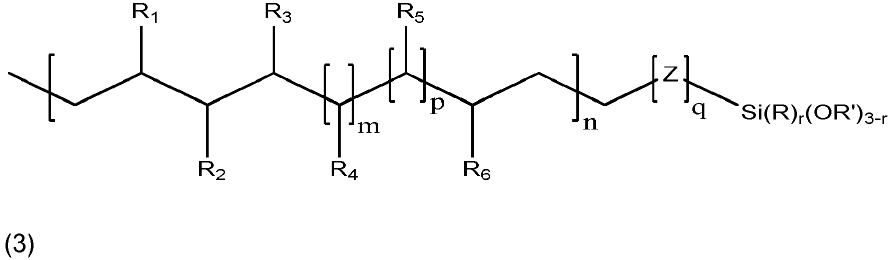 dans lesquelles 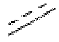 , m, p, q, r, n, Z, R, R', R1, R2, R3, R4, R5 et R6 ont les significations données plus avant.

Comme il est connu de l'homme du métier, la liaison 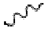 signifie que la liaison est orientée géométriquement d'un côté ou de l'autre par rapport à la double liaison (cis (Z) ou trans (E)).

De façon particulièrement préférée, m est égal à 1, p est égal à 1. Dans ce cas, de préférence q est égal à 0.

La formule (2) illustre le cas où l'unité de répétition de la chaîne principale du polymère de formule (1) est insaturée et comporte au moins une double liaison carbone - carbone. Dans un mode de réalisation préféré, le polymère de formule (2) ne comprend qu'une seule double liaison carbone - carbone par unité de répétition [...]ₙ, et le polymère est de formule (2').

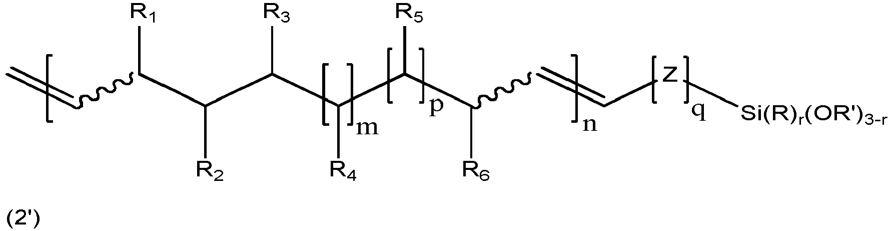

Dans ce cas, de façon préférée, m et p sont égaux à 1.

La formule (3) illustre le cas où la chaîne principale du polymère de formule (1) est saturée.

Le polymère de formule (3) peut par exemple être issu de l'hydrogénation du polymère de formule (2).

Le polymère de formule (2) est généralement d'orientation trans (E) - trans (E), trans (E) - cis (Z) ou cis (Z) - cis (Z). Les trois isomères sont généralement obtenus en proportions variables, avec le plus souvent une majorité de trans (E) - trans (E). Il est possible selon l'invention d'obtenir quasi majoritairement de l'isomère trans (E) - trans (E).

Selon un mode de réalisation préféré de l'invention, l'invention concerne un polymère hydrocarboné à groupement terminal alcoxysilane, ledit polymère hydrocarboné étant de formule (4) : 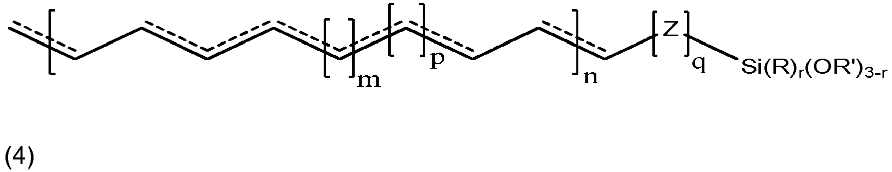 dans laquelle 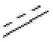 , m, p, q, r, n, Z, R et R' ont les significations données plus avant.

De préférence, le groupe de formule -[Z]_{q}-Si(R)ᵣ(OR')₃₋ᵣ est choisi parmi -Si(OCH₃)₃; -SiCH₃(OCH₃)₂; -CH₂Si(OCH₃)₃; -CH₂SiCH₃(OCH₃)₂; -CO-O-(CH₂)₃Si(OCH₃)₃) ; et -CO-O-(CH₂)₃SiCH₃(OCH₃)₂).

La formule (4) illustre le cas où le polymère de formule (1) est tel que R1, R2, R3, R4, R5 et R6 sont chacun un hydrogène (H). Dans un mode de réalisation préféré, le polymère de formule (4) ne comprend au plus qu'une seule double liaison carbone - carbone par unité de répétition [...]ₙ, et le polymère est de formule (4').

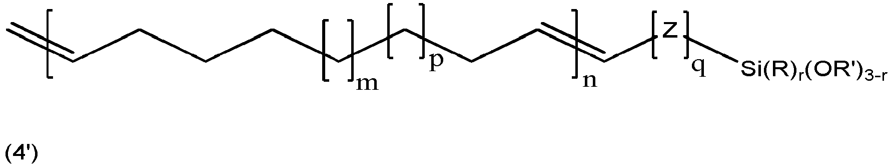

Dans ce cas, de façon préférée, m et p sont égaux à 1.

De préférence, le groupe de formule -[Z]_{q}-Si(R)ᵣ(OR')₃₋ᵣ est choisi parmi -Si(OCH₃)₃; -SiCH₃(OCH₃)₂; -CH₂Si(OCH₃)₃; -CH₂SiCH₃(OCH₃)₂; -CO-O-(CH₂)₃Si(OCH₃)₃) ; et -CO-O-(CH₂)₃SiCH₃(OCH₃)₂).

Selon ce mode de réalisation, de préférence, l'invention concerne un polymère hydrocarboné à groupement terminal alcoxysilane, ledit polymère hydrocarboné étant de formule (5) ou de formule (6) : 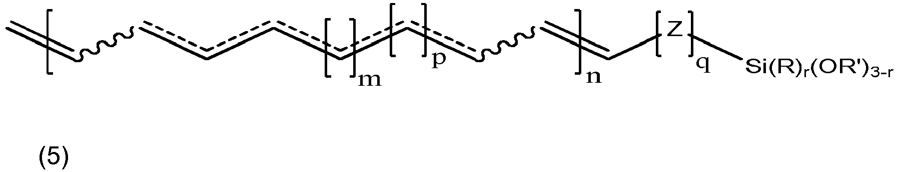 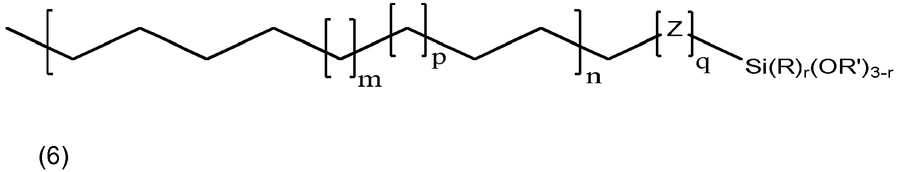 dans lesquelles 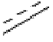 , m, p, q, r, n, Z, R et R' ont les significations données plus avant.

La formule (5) illustre le cas où l'unité de répétition de la chaîne principale du polymère de formule (4) est insaturée et comporte au moins une double liaison carbone - carbone.

Dans un mode de réalisation préféré, le polymère de formule (5) ne comprend qu'une seule double liaison carbone - carbone par unité de répétition [...]ₙ, et le polymère est de formule (5'). Dans ce cas, de façon préférée, m et p sont égaux à 1.

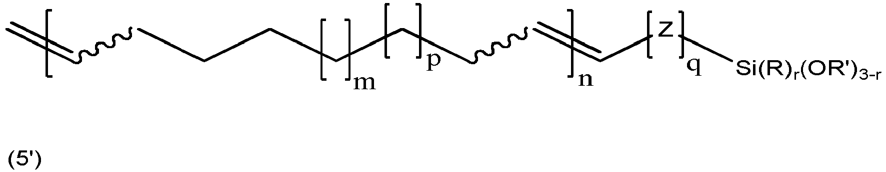

La formule (6) illustre le cas où la chaîne principale du polymère de formule (4) est saturée.

Le polymère de formule (6) peut par exemple être issu de l'hydrogénation du polymère de formule (5).

Les formules (5) et (6) correspondent aux formules (2) et (3) dans lesquelles R1, R2, R3, R4, R5 et R6 sont chacun un hydrogène (H).

De préférence, pour chacune de ces deux formules (5) et (6), le groupe de formule -[Z]_{q}-Si(R)ᵣ(OR')₃₋ᵣ est choisi parmi -Si(OCH₃)₃ ; -SiCH₃(OCH₃)₂; -CH₂Si(OCH₃)₃ ; -CH₂SiCH₃(OCH₃)₂; -CO-O-(CH₂)₃Si(OCH₃)₃) ; et -CO-O-(CH₂)₃SiCH₃(OCH₃)₂).

L'invention concerne encore un procédé de préparation d'au moins un polymère hydrocarboné à groupement alcoxysilane selon l'invention, ledit procédé comprenant au moins une étape de polymérisation par ouverture de cycle par métathèse, en présence :
- d'au moins un catalyseur de métathèse, de préférence un catalyseur comprenant du ruthénium, de façon encore plus préférée un catalyseur de Grubbs,
- d'au moins un agent de transfert de chaîne (CTA) choisi dans le groupe formé par les alcénylsilanes ayant une double liaison carbone-carbone monosubstituée, de préférence dans le groupe formé par le vinyltriméthoxysilane, l'allyltriméthoxysilane et le 3-(triméthoxysilyl)-propyl acrylate, et
- d'au moins un composé choisi parmi les composés comprenant au moins un cycle hydrocarboné et généralement de 6 à 16, de préférence de 6 à 12, atomes de carbone par cycle, ledit cycle comprenant au moins une double liaison carbone - carbone, et les dérivés substitués de ce composé, ledit composé étant généralement de formule (7) : 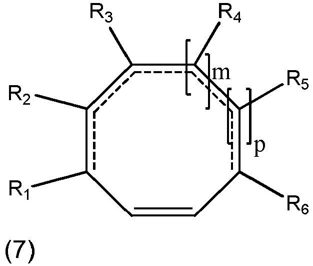
   dans laquelle m, p, R1, R2, R3, R4, R5 et R6 ont les significations données plus haut,
   ladite étape étant mise en œuvre pendant une durée inférieure à 2h (i.e. de 0 à 2h- bornes exclues), de préférence inférieure à 30 minutes, lorsque R1 et R6 sont tous deux égaux à H ; et ladite étape étant mise en œuvre pendant une durée inférieure ou égale à 30h lorsque l'un au moins de R1 et R6 n'est pas H.

Par « lorsque l'un au moins de R1 et R6 n'est pas H » on entend selon l'invention que R1 n'est pas H ou bien R6 n'est pas H ou bien à la fois R1 et R6 ne sont pas H.

Lorsque R1 et R6 sont tous deux égaux à H, la durée de la réaction est de préférence de 1 à 30 minutes, de façon encore plus préférée de 2 à 20 minutes, par exemple de 5 à 10 minutes (bornes incluses).

Le rapport molaire du CTA sur le composé comprenant au moins un groupe hydrocarboné est généralement compris dans une fourchette de 1 à 10% en moles, de préférence de 5 à 10% en moles.

Par alcénylsilane comportant une double liaison carbone - carbone, on entend selon l'invention un composé de formule H₂C=CH-(CH₂)_{z}Si(R¹)ₜ(R²)ᵤ(OR³)₃₋ₜ₋ᵤ dans lequel z est compris de 0 à 10 et R¹, R² et R³ sont, chacun indépendamment des autres, un groupe alkyle saturé, linéaire ou ramifié, comprenant de un à quatre, de préférence de un à deux, atomes de carbone et t = 0, 1 ou 2, et u = 0, 1 ou 2, avec t + u<3.

De façon générale, les composés sont choisis parmi les composés comprenant au moins un cycle hydrocarboné et généralement de 6 à 16, de préférence de 6 à 12, atomes de carbone par cycle, ledit cycle comprenant au moins une double liaison carbone - carbone. La chaîne du cycle est de préférence constituée d'atomes de carbone, mais au moins un atome de carbone peut être remplacé par un autre atome tel que l'oxygène. Les dérivés substitués de ces composés comprennent les dérivés comprenant au moins un deuxième cycle comprenant au moins une liaison carbone-carbone en commun avec le premier cycle.

Les composés de formule (7) sont substitués ou non. Par substitution on entend selon l'invention la présence d'un groupement, généralement remplaçant un hydrogène, la substitution étant de type alkyle, cyclique ou acyclique, alcoxycarbonyle ou halogéno, et la substitution étant de préférence située en position alpha, bêta, gamma ou delta de la double liaison carbone - carbone, de façon encore plus préférée en position gamma ou delta de la double liaison carbone - carbone.

Dans un mode de réalisation préféré de l'invention, ces composés ne sont pas substitués, c'est-à-dire que R1 = R2 = R3 = R4 = R5 = R6 = H.

Dans un mode de réalisation préféré de l'invention, indépendant ou non du mode de réalisation précédent, m = p = 1.

Dans un mode de réalisation préféré de l'invention, indépendant ou non des modes de réalisation précédents, l'agent de transfert de chaîne a pour formule CH₂=CH-[Z]_{q}-Si(R)ᵣ(OR')₃₋ᵣ, dans laquelle Z, R, R', q et r ont les significations données plus haut.

De préférence, l'agent de transfert de chaîne est choisi parmi : CH₂=CH-Si(OCH₃)₃; CH₂=CH-SiCH₃(OCH₃)₂; CH₂=CH-CH₂Si(OCH₃)₃; CH₂=CH-CH₂SiCH₃(OCH₃)₂; CH₂=CH-CO-O-(CH₂)₃Si(OCH₃)₃); et CH₂=CH-CO-O-(CH₂)₃SiCH₃(OCH₃)₂).

La polymérisation par ouverture de cycle par métathèse est une réaction bien connue de l'homme du métier, qui est mise en œuvre ici en présence du vinyltriméthoxysilane, de l'allyltriméthoxysilane ou du 3-(triméthoxysilyl)-propyl acrylate.

Le vinyltriméthoxysilane (ou (triméthoxysilyl)éthylène ou éthényltriméthoxysilane), (produit de numéro CAS 2768-02-7), l'allyltriméthoxysilane (produit de numéro CAS 2551-83-9) et le 3-(triméthoxysilyl)propyl acrylate (produit de numéro CAS 4369-14-6) sont des produits disponibles dans le commerce.

De façon générale, les composés cycliques de formule (7) comportent au moins un cycle comprenant de 6 à 16 atomes de chaîne et au moins une liaison double carbone - carbone. La chaîne du cycle est de préférence constituée d'atomes de carbone, mais au moins un atome de carbone peut être remplacé par un autre atome tel que l'oxygène.

Les composés cycliques de formule (7) sont de préférence selon l'invention choisis dans le groupe formé par le cycloheptène, le cyclooctène, le cyclononène, le cyclodécène, le cycloundécène, le cyclododécène, le 1,5-cyclooctadiène, le cyclononadiène, le 1,5,9-cyclodécatriène, ainsi que les norbornène, norbornadiène, dicyclopentadiène, 7-oxanorbornène et 7-oxanorbornadiène respectivement de formules :

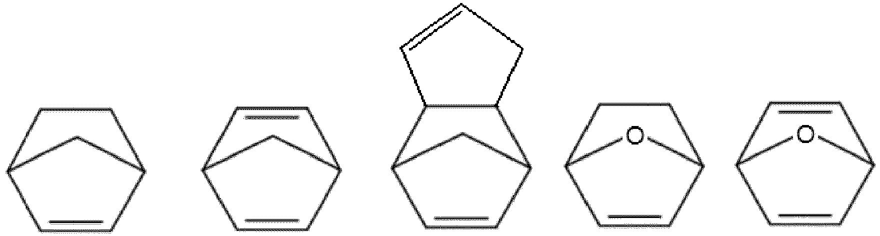

Le cyclooctène (COE) et le 1,5-cyclooctadiène (COD) sont tout particulièrement préférés.

On peut aussi citer les dérivés mono- ou poly-substitués de ces composés cycliques, tels que, de préférence, les alkyl-cyclooctènes, les alkyl-cyclooctadiènes, les halocycloalcènes et les alkylcarbonylcycloalcènes. Dans un tel cas, les groupes alkyle, halogéno et alcoxycarbonyle ont les significations données plus haut. Les groupes alkyles sont le plus souvent en position alpha, bêta, gamma ou delta de la double liaison carbone - carbone, de façon encore plus préférée en position gamma ou delta de la double liaison carbone - carbone.

La polymérisation par ouverture de cycle par métathèse est mise en œuvre le plus souvent en présence d'au moins un solvant, généralement choisi dans le groupe formé par les solvants aqueux, organiques ou protiques typiquement utilisés dans les réactions de polymérisation et qui sont inertes dans les conditions de la polymérisation, tels que les hydrocarbures aromatiques, les hydrocarbures chlorés, les éthers, les hydrocarbures aliphatiques, les alcools, l'eau ou leurs mélanges. Un solvant préféré est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol, l'eau ou leurs mélanges. De façon encore plus préférée, le solvant est choisi dans le groupe formé par le benzène, le toluène, le para-xylène, le chlorure de méthylène, le dichloroéthane, le dichlorobenzène, le chlorobenzène, le tétrahydrofurane, le diéthyl éther, le pentane, l'hexane, l'heptane, le méthanol, l'éthanol ou leurs mélanges. De façon encore plus particulièrement préférée, le solvant est le toluène, l'hexane, l'heptane, ou un mélange de toluène et de chlorure de méthylène. La solubilité du polymère formé au cours de la réaction de polymérisation dépend généralement et principalement du choix du solvant et du poids molaire du polymère obtenu. Il est aussi possible que la réaction soit mise en œuvre sans solvant.

Le catalyseur de métathèse, tel que par exemple un catalyseur de Grubbs, est généralement un produit du commerce.

Le catalyseur de métathèse est le plus souvent un catalyseur de métal de transition dont notamment un catalyseur comprenant du ruthénium le plus souvent sous forme de complexe(s) du ruthénium tel que du ruthénium carbène. On peut ainsi utiliser de façon particulièrement préférée les catalyseurs de Grubbs. Par catalyseur de Grubbs, on entend généralement selon l'invention un catalyseur de Grubbs 1^{ère} et 2^{ème} génération, mais aussi tout autre catalyseur de type Grubbs (comprenant du ruthénium - carbène) accessible à l'homme du métier, tels que par exemple les catalyseurs de Grubbs substitués décrits dans le brevet US 5849851.

Un catalyseur de Grubbs 1^{ère} génération est généralement de formule (8) : 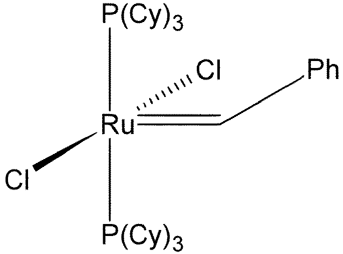 (8), où Ph est le phényl et Cy est le cyclohexyle.

Le groupe P(Cy)₃ et un groupe tricyclohexyl phosphine.

La dénomination IUPAC de ce composé est: benzylidène-bis(tricyclohexylphosphine) dichlororuthénium (de numéro CAS 172222-30-9).

Un catalyseur de Grubbs 2^{ème} génération est généralement de formule (9) : 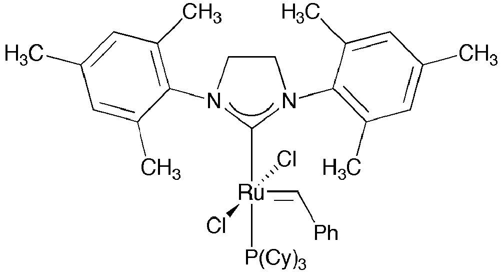 (9), où Ph est le phényl et Cy est le cyclohexyle.

La dénomination IUPAC de la deuxième génération de ce catalyseur est benzylidène [1,3- bis(2,4,6-triméthylphényl)-2- imidazolidinylidène] dichloro(tricyclohexylphosphine) ruthénium (de numéro CAS 246047-72-3).

Le procédé de préparation selon l'invention peut comporter en outre au moins une étape supplémentaire d'hydrogénation de doubles liaisons. Bien évidemment cette étape n'est mise en œuvre que si le polymère hydrocarboné de formule (1) selon l'invention est insaturé, c'est-à-dire qu'il est en particulier un polymère de formule (2), (2'), (5) ou (5'). Il est ainsi procédé à l'hydrogénation d'au moins une double liaison, de préférence à l'hydrogénation totale ou partielle des doubles liaisons.

Cette étape est généralement mise en œuvre par hydrogénation catalytique, le plus souvent sous pression d'hydrogène et en présence d'un catalyseur d'hydrogénation tel qu'un catalyseur de palladium supporté par du carbone (Pd/C). Elle permet plus particulièrement de former un composé de formule (3) (respectivement (6)) à partir d'un composé de formule (2) ou (2') (respectivement (5) ou (5')).

Avantageusement, le nouveau polymère hydrocarboné selon l'invention peut être utilisé en tant qu'additif, le plus souvent:
- en tant que promoteur d'adhésion, ou
- en tant que plastifiant réactif dans les compositions adhésives.

Le polymère hydrocarboné selon l'invention peut ainsi être utilisé par exemple en tant que promoteur d'adhésion au sein d'une composition adhésive de type HMA ou HMPSA (HMA pour « *Hot Melt Adhesive* » en anglais, i.e. adhésif thermofusible, et HMPSA pour « *Hot Melt Pressure-Sensitive Adhesive* » en anglais, i.e. adhésif thermofusible sensible à la pression) sur base de polyoléfines ou de polymères blocs comprenant du styrène.

Le polymère hydrocarboné selon l'invention peut être utilisé par exemple en tant que plastifiant réactif dans les compositions adhésives silylées.

En effet, le groupement terminal alcoxysilane des polymères hydrocarbonés insaturés ou saturés selon l'invention constitue avantageusement une tête polaire située à proximité de la chaîne polymérique apolaire et lipophile. Par conséquent, l'ajout d'au moins un polymère hydrocarboné, insaturé ou saturé, selon l'invention permet de diminuer la tension interfaciale de compositions adhésives.

L'invention concerne donc aussi l'utilisation d'au moins un polymère hydrocarboné selon l'invention en tant que promoteur d'adhésion.

L'invention concerne donc aussi l'utilisation d'au moins un polymère hydrocarboné selon l'invention en tant que plastifiant réactif au sein d'une composition adhésive.

L'invention sera mieux comprise à la vue des exemples qui suivent.

### EXEMPLES

Les exemples qui suivent illustrent l'invention sans pour autant en limiter la portée.

Les réactions de synthèse des exemples étaient menées en une seule étape de polymérisation par ouverture de cycle du cyclooctène en présence d'un catalyseur de Grubbs et d'un agent de transfert.

Le schéma général de réaction (schéma n°1) des polymérisations des exemples 1 à 3 est donné ci-après, et sera explicité au cas par cas dans ces exemples 1 à 3.

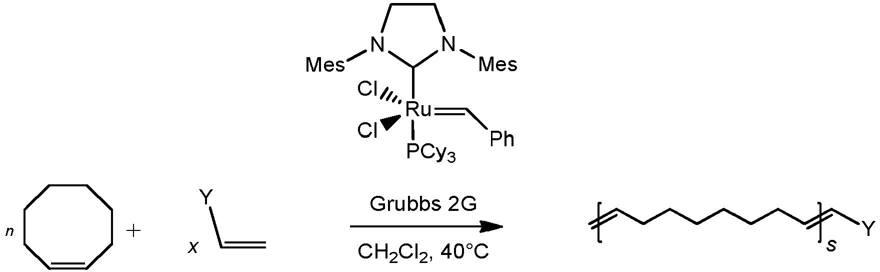

Où CTA est l'agent de transfert de chaîne pour « *Chain Transfer Agent* » en anglais, où le COE est le cyclooctène, où Grubbs 2G est le catalyseur de formule (9) et où Y (égal à -[Z]_{q}-Si(R)ᵣ(OR')₃₋ᵣ) est choisi parmi -Si(OCH₃)₃ (cas où le CTA est le vinyltriméthoxysilane) ; -CH₂Si(OCH₃)₃ (cas où le CTA est l'allyltriméthoxysilane acrylate) et -(CH₂)₃Si(OCH₃)₃ (cas où le CTA est le 3-(triméthoxysilyl)-propyl) ; x est le nombre de moles de CTA ; n est le nombre de moles de COE, et s est le nombre de répétition du motif monomère dans le polymère.

En tout état de cause « s » est un nombre inférieur ou égal à « n », de préférence égal à n.

La réaction pouvait durer jusqu'à 2h.

### Protocole expérimental

Toutes les expériences étaient effectuées si nécessaire sous atmosphère d'argon.

Tous les réactifs (cyclooctène (COE), le 3-hexyl-cyclootène (3-H-COE), le catalyseur de Grubbs 2ème génération (ou 2G ou « Grubbs 2^{nd} ») de formule (9), le vinyltriméthoxysilane, l'allyltriméthoxysilane et le 3-(triméthoxysilyl)-propyl acrylate), étaient des produits de la société Sigma-Aldrich.

Le cyclooctène (COE) et le 3-hexyl-cyclootène (3-H-COE) étaient dégazés une première fois, puis séchés sur CaH₂ puis enfin distillés avant utilisation.

Tous les autres produits étaient utilisés tels que reçus.

Les spectres RMN étaient enregistrés sous spectromètres AM-500 Bruker et AM-400 Bruker, à 298 K dans du CDCl₃. Les déplacements chimiques étaient référencés par rapport au tétramethylsilane (TMS) en utilisant la résonance proton (¹H) carbone ou (¹³C) du solvant deutéré. Le déplacement chimique du ²⁹Si était référencé par rapport au TMS.

Les masses molaires moyennes en nombre et en poids (Mₙ and M_{w}) et la polydispersité PDI (M_{w}/Mₙ) des polymères étaient déterminés par chromatographie d'exclusion stérique (SEC), avec étalonnage PolyStyrène en utilisant un instrument Polymer Laboratories PL-GPC 50. Les échantillons étaient élués au tétrahydrofurane (THF) (produit de la société Sigma-Aldrich) à 30°C et à 1,0 mL/min. Des spectres de masse étaient enregistrés avec un spectromètre (Brucker) AutoFlex LT à haute résolution équipé d'une source laser pulsée N₂ (337 nm, 4 ns de largeur de puise).

### Procédure générale de polymérisation des exemples 1 à 3

Toutes les polymérisations étaient effectuées de façon similaire. Les seules différences résidaient dans la nature et la concentration initiale de l'agent de transfert de chaîne (CTA).

Une procédure typique ici est décrite ci-après.

Le monomère COE (1 mmol) et du CH₂Cl₂ sec (7 mL) étaient placés dans un tricol de 20 mL dans laquelle était aussi placé un barreau magnétique d'agitation revêtu de Téflon^{®}. Le ballon et son contenu étaient ensuite mis sous argon. Du CTA (0,1 mmol), était alors introduit dans le ballon par seringue. Le ballon était immergé dans un bain d'huile à 40°C immédiatement après l'ajout, par une canule, du catalyseur G2 (5 µmol) en solution dans du CH₂Cl₂. Au bout de 5 (ou 10) minutes à compter de l'addition du catalyseur, le produit présent dans le ballon était extrait après que le solvant était concentré sous vide. Un produit était alors récupéré après précipitation dans le méthanol (qui permettait de récupérer le catalyseur), filtration et séchage sous vide. L'analyse permettait de mettre en évidence que le produit était bien un polymère ayant la formule attendue.

Tous les polymères préparés dans les exemples étaient récupérés en tant que poudre solide incolore, facilement soluble dans le chloroforme et insoluble dans le méthanol.

### Exemple 1: Synthèse d'un polymère comprenant un groupement terminal alcoxysilane à partir de cyclooctène (COE) et de vinyltriméthoxysilane

La réaction était mise en œuvre selon le schéma général de réaction n°1 donné précédemment avec Y = -Si(OCH₃)₃.

Le polymère attendu était synthétisé. Il présentait une température de fusion de 57°C.

Différents essais étaient conduits selon cette réaction. Ils sont résumés dans le tableau 1 ci-après.

**Tableau 1**

| **Essai n°^{(a)}** | **[COE]ₒ/[CTA]ₒ/[Ru]ₒ (mol/mol)** | **Conversion (%)** | **Mn_{SEC}^{(b)} (g/mol)** | **PDI** |
|---|---|---|---|---|
| 1 | 2 000:200:1 | 100 | 15 000 | 1,47 |
| 2 | 2 000:100:1 | 100 | 19 000 | 1,51 |
| 3 | 2 000:50:1 | 100 | 23 400 | 1,50 |
| 4 | 2 000:20:1 | 100 | 34 500 | 1,61 |

| | | | | |
|---|---|---|---|---|
| Où CTA = vinyltriméthoxysilane et [X]ₒ = concentration initiale de X (a) La polymérisation était conduite sous les conditions particulières suivantes : 5µmol de catalyseur (G2), 7 mL deCH₂Cl₂, température de 40°C, durée 10 minutes. (b) Les valeurs Mn_{SEC} étaient déterminées par SEC dans du THF à 30°C | | | | |

Des analyses RMN du polymère obtenu à l'essai n°2 ont donné les valeurs suivantes, qui confirmaient la formule structurelle du polymère :
RMN ¹H (CDCl₃, 400 MHz, 298 K) - δₚₚₘ: 5.38; 1.97, 1.29; groupements terminaux: 2.17 (m, 4H, -C*H₂*-CH=CH₂), 3.57 (s, 9H, -(C*H₃*O-Si), 4.92-5.01 (m, 2H, C*H₂*=CH-CH₂-), 5.80-5.82 (m, 1H, CH₂=C*H*-CH₂-), 6.41-6.48 (m, 1H, -*CH*=CH-Si).
RMN ¹³C (¹H) (CDCl₃, 100 MHz, 298 K) - δₚₚₘ: 130.1 (trans), 129.9 (cis), 33.7, 32.6, 29.1, 28.2, 27.2; groupements terminaux: 154.8 (-*CH*=CH-Si), 139.1 (-*CH*=CH₂), 117.1 (-CH=C*H*-Si), 114.1 (*CH₂*=CH-), 50.5 ((*CH₃*O)₃Si).

### Exemple 2: Synthèse d'un polymère comprenant un groupement terminal alcoxysilane à partir de cyclooctène (COE) et d'allyltriméthoxysilane

La réaction était mise en œuvre selon le schéma général de réaction n°1 donné précédemment avec Y = -CH₂-Si(OCH₃)₃.

Le polymère attendu était synthétisé. Il présentait une température de fusion de 54°C.

Différents essais étaient conduits selon cette réaction. Ils sont résumés dans le tableau 2 ci-après.

**Tableau 2**

| **Essai n°^{(a)}** | **[COE]ₒ/[CTA]ₒ/[Ru]ₒ (mol/mol)** | **Conversion (%)** | **Mn_{SEC}^{(b)} (g/mol)** | **PDI** |
|---|---|---|---|---|
| **5** | 2 000:200:1 | 100 | 8 500 | 1,28 |
| **6** | 2 000:100:1 | 100 | 9 700 | 1,32 |
| **7** | 2 000:50:1 | 100 | 20 000 | 1,44 |
| **8** | 2 000:20:1 | 100 | 33 800 | 1,55 |

| | | | | |
|---|---|---|---|---|
| Où CTA = vinyltriméthoxysilane et [X]ₒ = concentration initiale de X (a) La polymérisation était conduite sous les conditions particulières suivantes : 5µmol de catalyseur (G2), 7 mL deCH₂Cl₂, température de 40°C, durée 5 minutes. (b) Les valeurs Mn_{SEC} étaient déterminées par SEC dans du THF à 30°C | | | | |

Des analyses RMN du polymère obtenu à l'essai n°6 ont donné les valeurs suivantes, qui confirmaient la formule structurelle du polymère :
RMN ¹H (CDCl₃, 400 MHz, 298 K) - δₚₚₘ: 5.37; 1.96, 1.27; groupements terminaux: 1.57 (m, 2H, -C*H₂*-Si), 3.57 (s, 9H, -(C*H₃*O-Si), 4.91-5.01 (m, 2H, C*H₂*=CH-CH₂-), 5.34-5.37 (m, 2H, -*CH*=C*H*-CH₂-Si), 5.79-5.84 (m, 1H, CH₂=*CH*-CH₂-).
RMN ¹³C (¹H) (CDCl₃, 100 MHz, 298 K) - δₚₚₘ: 130.3 (trans), 129.9 (cis), 33.8, 32.6, 29.6, 29.1, 28.2, 27.2; groupements terminaux: 139.2 (-*CH*=CH₂), 129.9 (-*CH*=CH-CH₂-Si), 122.6 (-CH=C*H*-CH₂-Si), 114.1 (*CH₂*=CH-), 50.7 ((*CH₃*O)₃Si).

### Exemple 3: Synthèse d'un polymère comprenant un groupement terminal alcoxysilane à partir de cyclooctène (COE) et de 3-(triméthoxysilyl)-propyl acrylate

La réaction était mise en œuvre selon le schéma général de réaction n°1 donné précédemment avec Y = -CO-O-(CH₂)₃Si(OCH₃)₃).

Le polymère attendu était synthétisé. Il présentait une température de fusion de 59°C.

Différents essais étaient conduits selon cette réaction. Ils sont résumés dans le tableau 3 ci-après.

**Tableau 3**

| **Essai n**°^{(a)} | **[COE]ₒ/[CTA]ₒ/[Ru]ₒ (mol/mol)** | **Conversion (%)** | **Mn**_{SEC}^{(b)} **(g/mol)** | **PDI** |
|---|---|---|---|---|
| 9 | 2 000:200:1 | 100 | 11 300 | 1,82 |
| 10 | 2 000:100:1 | 100 | 14 700 | 1,53 |
| 11 | 2 000:50:1 | 100 | 26 300 | 1,47 |
| 12 | 2 000:20:1 | 100 | 36 000 | 1,55 |

| | | | | |
|---|---|---|---|---|
| Où CTA = vinyltriméthoxysilane et [X]ₒ = concentration initiale de X (a) La polymérisation était conduite sous les conditions particulières suivantes : 5µmol de catalyseur (G2), 7 mL deCH₂Cl₂, température de 40°C, durée 5 minutes. (b) Les valeurs Mn_{SEC} étaient déterminées par SEC dans du THF à 30°C | | | | |

Des analyses RMN du polymère obtenu à l'essai n°10 ont donné les valeurs suivantes, qui confirmaient la formule structurelle du polymère :
RMN ¹H (CDCl₃, 400 MHz, 298 K) - δₚₚₘ: 5.36; 1.97, 1.30; groupements terminaux: 0.67 (t, 2H, -C*H₂*-Si), 1.76 (t, 2H, -C*H₂*-CH-Si), 3.58 (s, 9H, C*H₃*O-Si), 4.09 (t, 2H, -C*H₂*-CH₂-CH₂-Si), 4.94 (m, 2H, *CH₂*=CH-CH₂-), 5.38 (m, 1H, CH₂=*CH*-CH₂-), 5.79-5.84 (m, 1H, CH₂=C*H*-CO₂-), 6.94 (1H, *CH₂*=CH-CO₂-).
RMN ¹³C (¹H) (CDCl₃, 100 MHz, 298 K) - δₚₚₘ: 130.3 (trans), 129.9 (cis), 33.8, 32.6, 29.6, 29.1, 27.2; groupements terminaux: 166.7 (-*CO₂*-CH₂), 149.4 (-*CH*=CH-CO₂-), 139.1 (-*CH*=CH₂), 121.21 (-CH=C*H*-CO₂-), 114.1 (*CH₂*=CH-), 66.1 (-CO₂-*CH₂*-), 50.6 ((*CH₃O*)₃Si), 22.0 (-CH₂-*CH₂*-CH₂-), 5.20 (-CH₂-CH₂-*CH₂*-).

### Exemple 4: Synthèse d'un polymère comprenant un groupement terminal alcoxysilane à partir de 3-hexyl cyclooctène (3-H-COE) et de 3-(triméthoxysilyl)-propyl acrylate

La réaction était mise en œuvre selon le schéma général de réaction n°2 donné ci-après.

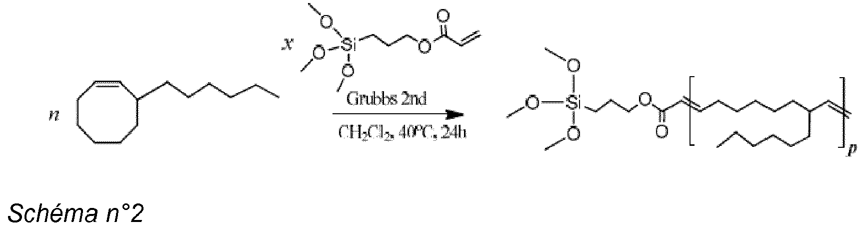

Le polymère attendu était synthétisé.

Un seul essai était conduit selon cette réaction. Il est résumé dans le tableau 4 ci-après.

**Tableau 4**

| **[3-H-COE]ₒ/[CTA]ₒ/[Ru]ₒ (mol/mol)** | **Conversion (%)** | **Mn**_{SEC}^{(b)} **(g/mol)** | **PDI** |
|---|---|---|---|
| 2 000:100:1 | 100 | 4 300 | 1,56 |

| | | | |
|---|---|---|---|
| Où CTA = vinyltriméthoxysilane et [X]ₒ = concentration initiale de X (a) La polymérisation était conduite sous les conditions particulières suivantes : catalyseur (G2), 7 mL deCH₂Cl₂, température de 40°C, durée 24 heures. (b) Les valeurs Mn_{SEC} étaient déterminées par SEC dans du THF à 30°C | | | |

Des analyses RMN du polymère obtenu ont donné les valeurs suivantes, qui confirmaient la formule structurelle du polymère :
RMN ¹H (CDCl₃, 400 MHz, 298 K) - δₚₚₘ: 5.33; 5.10 ; 1.96, 1.29; groupements terminaux: 6.93 (m, 2H, -C*H*=CH-CO₂-), 5.83 (m, 2H, -CH=*CH*-CO₂-), 5.50 (m, CH₂=*CH*-), 5.04 (m, C*H₂*=CH-), 4.08 (t, -O-C*H₂*-CH₂-CH₂-Si6), 3.58 (s, *CH₃*-O-Si-), 1.84 (m, -*CH*(CH₂)₅ et -O-CH₂-*CH₂*-CH₂-Si-), 0.86 (t, -(CH₂)₅-*CH₃*), 0.67 (m, -O-CH₂-CH₂-*CH₂*- Si-).
RMN ¹³C (¹H) (CDCl₃, 100 MHz, 298 K) - δₚₚₘ: 134.8, 134.1, 129.0, 128.0, 35.9, 34.6-34.1, 31.0, 28.3-21.7; groupements terminaux: 165.6 (-O-*CO*-CH-), 148.3 (-*CH*=CH-CO-), 142.5 (-CH=*CH*-CO-), 120.1 (CH₂=*CH*-), 112.8 (*CH₂*=CH-), 65.0 (-Si-CH₂-CH₂-*CH₂*-O-CO-), 49.6 (*CH₃*-O-Si-), 41.9 (-*CH*CH=CH₂-), 31.6 (-CH-*CH₂*-), 13.1 (C*H₃*-(CH₂)₅-), 4.4 (-Si-*CH₂*-CH₂-CH₂-O-).

## Revendications

1. Polymère hydrocarboné à groupement terminal alcoxysilane, ledit polymère hydrocarboné étant de formule (1) : 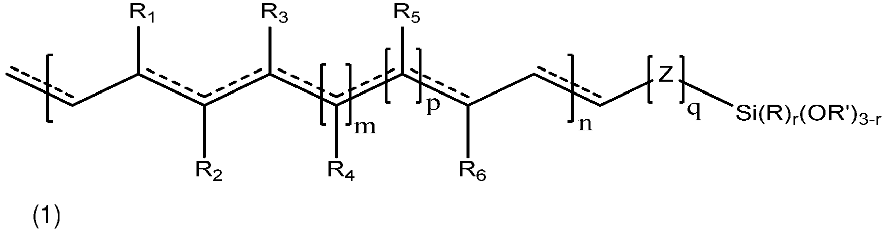 dans laquelle :
- chaque liaison carbone - carbone de la chaîne notée 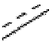 est une double liaison ou une simple liaison, en accord avec les règles de valence de la chimie organique ;
- Les groupes R1, R2, R3, R4, R5, sont chacun, indépendamment ou non des autres groupes, un hydrogène, un groupe halogéno, un groupe alcoxycarbonyle ou un groupe alkyle, les groupes R1 à R6 pouvant être liés entre eux en tant que membres d'un même cycle ou hétérocycle saturé ou insaturé (i.e. comportant au moins une double liaison carbone - carbone, en incluant les aromatiques),
- R6 est, indépendamment ou non des autres groupes R1, R2, R3, R4 et R5, un groupe halogéno, un groupe alcoxycarbonyle ou un groupe alkyle,
- m et p sont des nombres entiers compris chacun dans une fourchette allant de 0 à 5, de préférence de 0 à 2, de façon encore plus préférée m et p sont tous deux égaux à 1, la somme m + p étant elle-même comprise dans une fourchette de 0 à 10, de préférence de 0 à 6,
- R et R', identiques ou différents, représentent chacun un groupe alkyle linéaire ou ramifié, de préférence linéaire, comportant de 1 à 4, de préférence de 1 à 2, atomes de carbone,
- Z est un groupe divalent choisi par les groupes alkylènes, interrompus ou non par une fonction ester, et comportant de 1 à 22, de préférence de 1 à 6, atomes de carbone,
- q est un nombre entier égal à 0 ou 1,
- r est un nombre entier égal à 0, 1 ou 2, et
- n est un nombre entier tel que la masse molaire moyenne en nombre Mn du polymère hydrocarboné de formule (1) est comprise dans une fourchette de 400 à 50 000 g/mol, de préférence de 600 à 20 000 g/mol, et la polymolécularité (PDI) du polymère hydrocarboné de formule (1) est comprise dans une fourchette de 1,0 à 2,0, de préférence de 1,25 à 1,55.

2. Polymère hydrocarboné à groupement terminal alcoxysilane selon la revendication 1, tel que le groupe de formule -[Z]_{q}-Si(R)ᵣ(OR')₃₋ᵣ est choisi parmi -Si(OCH₃)₃; -SiCH₃(OCH₃)₂; -CH₂Si(OCH₃)₃;-CH₂SiCH₃(OCH₃)₂ ; -CO-O-(CH₂)₃Si(OCH₃)₃) ; et -CO-O-(CH₂)₃SiCH₃(OCH₃)₂).

3. Polymère hydrocarboné à groupement terminal alcoxysilane selon l'une des revendications 1 ou 2, ledit polymère hydrocarboné étant de formule (1') :

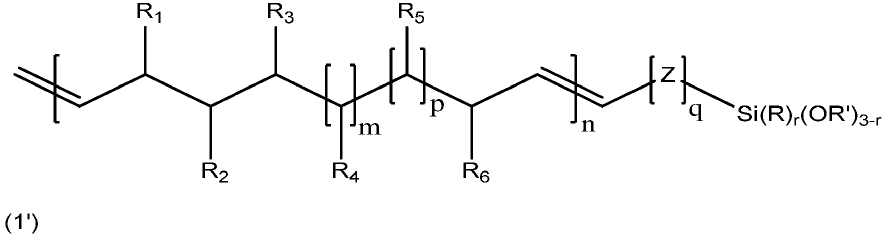

4. Polymère hydrocarboné à groupement terminal alcoxysilane selon l'une des revendications 1 ou 2, ledit polymère hydrocarboné étant de formule (2) ou de formule (3) : 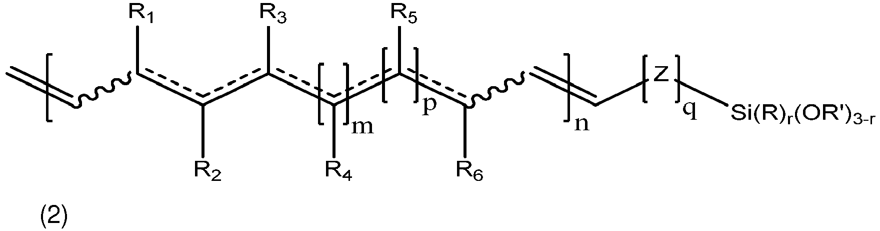 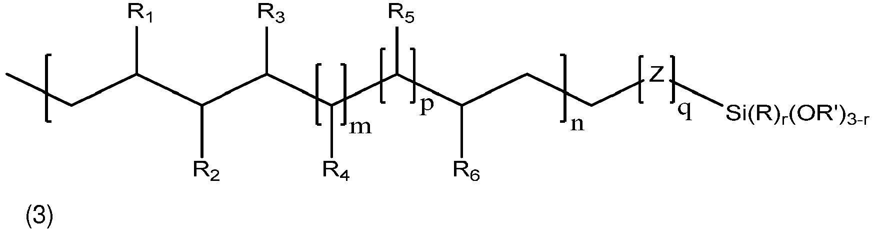 dans lesquelles 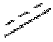 , m, p, q, r, n, Z, R, R', R1, R2, R3, R4, R5 et R6 ont les significations données dans la revendication 1.

5. Polymère hydrocarboné à groupement terminal alcoxysilane selon l'une des revendications 1 ou 2, ledit polymère hydrocarboné étant de formule (4) : 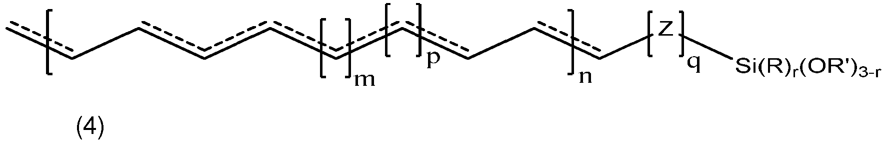 dans laquelle 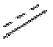 , m, p, q, r, n, Z, R et R' ont les significations données dans la revendication 1.

6. Polymère hydrocarboné à groupement terminal alcoxysilane selon la revendication 5, ledit polymère hydrocarboné étant de formule (4') :

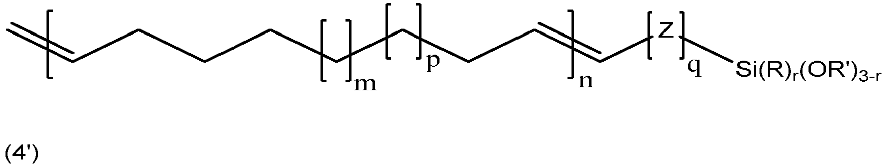

7. Polymère hydrocarboné à groupement terminal alcoxysilane selon la revendication 5, ledit polymère hydrocarboné étant de formule (5) ou de formule (6) : 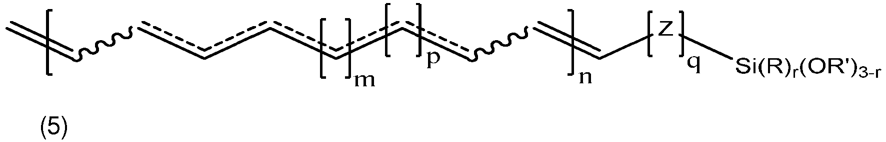 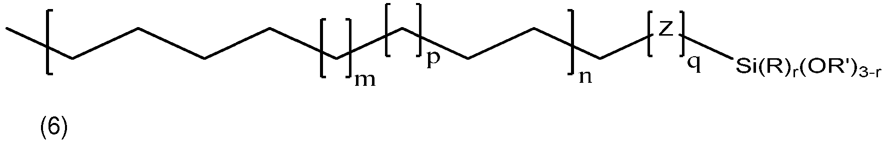 dans lesquelles 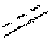 , m, p, q, r, n, Z, R et R' ont les significations données dans la revendication 1.

8. Procédé de préparation d'au moins un polymère hydrocarboné selon l'une des revendications 1 à 4, ledit procédé comprenant au moins une étape de polymérisation par ouverture de cycle par métathèse en présence :
- d'au moins un catalyseur de métathèse, de préférence un catalyseur comprenant du ruthénium, de façon encore plus préférée un catalyseur de Grubbs,
- d'au moins un agent de transfert de chaîne (CTA) choisi dans le groupe formé par les alcénylsilanes ayant une double liaison carbone-carbone monosubstituée, de préférence dans le groupe formé par le vinyltriméthoxysilane, l'allyltriméthoxysilane et le 3-(triméthoxysilyl)-propyl acrylate, et
- d'au moins un composé choisi parmi les composés comprenant au moins un cycle hydrocarboné et généralement de 6 à 16, de préférence de 6 à 12, atomes de carbone par cycle, ledit cycle comprenant au moins une double liaison carbone - carbone, et les dérivés substitués de ce composé, ledit composé étant de formule (7) : 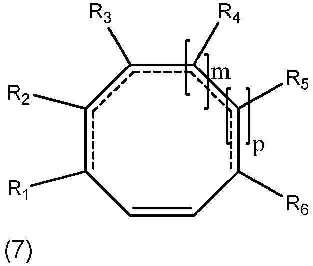
dans laquelle :
- chaque liaison carbone - carbone de la chaîne notée 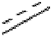 est une double liaison ou une simple liaison, en accord avec les règles de valence de la chimie organique ;
- Les groupes R1, R2, R3, R4, R5, sont chacun, indépendamment ou non des autres groupes, un hydrogène, un groupe halogéno, un groupe alcoxycarbonyle ou un groupe alkyle, les groupes R2 à R5 pouvant être liés entre eux en tant que membres d'un même cycle ou hétérocycle saturé ou insaturé,
- R6 est, indépendamment ou non des autres groupes R1, R2, R3, R4 et R5, un groupe halogéno, un groupe alcoxycarbonyle ou un groupe alkyle,
- m et p sont des nombres entiers compris chacun dans une fourchette allant de 0 à 5, de préférence de 0 à 2, de façon encore plus préférée m et p sont tous deux égaux à 1, la somme m + p étant elle-même comprise dans une fourchette de 0 à 10, de préférence de 0 à 6,
ladite étape étant mise en œuvre pendant une durée inférieure à 2h, de préférence inférieure à 30 minutes, lorsque R1 et R6 sont tous deux égaux à H ; et ladite étape étant mise en œuvre pendant une durée inférieure ou égale à 30h lorsque l'un au moins de R1 et R6 n'est pas H.

9. Procédé de préparation selon la revendication 8, tel que tel que l'agent de transfert de chaîne a pour formule CH₂=CH-[Z]_{q}-Si(R)ᵣ(OR')₃₋ᵣ, dans laquelle :
- R et R', identiques ou différents, représentent chacun un groupe alkyle linéaire ou ramifié, de préférence linéaire, comportant de 1 à 4, de préférence de 1 à 2, atomes de carbone,
- Z est un groupe divalent choisi par les groupes alkylènes, interrompus ou non par une fonction ester, et comportant de 1 à 22, de préférence de 1 à 6, atomes de carbone,
- q est un nombre entier égal à 0 ou 1, et
- r est un nombre entier égal à 0, 1 ou 2.

10. Procédé de préparation selon l'une des revendications 8 ou 9, tel que tel que l'agent de transfert de chaîne est choisi parmi : CH₂=CH-Si(OCH₃)₃ ; CH₂=CH-SiCH₃(OCH₃)₂ ; CH₂=CH-CH₂Si(OCH₃)₃ ; CH₂=CH-CH₂SiCH₃(OCH₃)₂ ; CH₂=CH-CO-O-(CH₂)₃Si(OCH₃)₃) ; et CH₂=CH-CO-O-(CH₂)₃SiCH₃(OCH₃)₂).

11. Procédé de préparation selon l'une des revendications 8 à 10, ledit procédé étant tel que le rapport molaire du CTA sur le composé comprenant au moins un groupe hydrocarboné est compris dans une fourchette de 1 à 10% en moles, de préférence de 5 à 10% en moles.

12. Procédé de préparation selon l'une des revendications 8 à 11, ledit procédé comprenant en outre au moins une étape supplémentaire d'hydrogénation de doubles liaisons.

13. Procédé de préparation selon la revendication 12, tel que tel que l'étape supplémentaire d'hydrogénation est mise en œuvre par hydrogénation catalytique, sous pression d'hydrogène et en présence d'un catalyseur d'hydrogénation tel qu'un catalyseur de palladium supporté par du carbone (Pd/C).

14. Utilisation d'au moins un polymère hydrocarboné selon l'une des revendications 1 à 7, en tant que promoteur d'adhésion.

15. Utilisation d'au moins un polymère hydrocarboné selon l'une des revendications 1 à 7, en tant que plastifiant réactif au sein d'une composition adhésive.

## Patentansprüche

1. Kohlenwasserstoffpolymer mit einer Alkoxysilan-Endgruppe, wobei das Kohlenwasserstoffpolymer die Formel (1) aufweist: 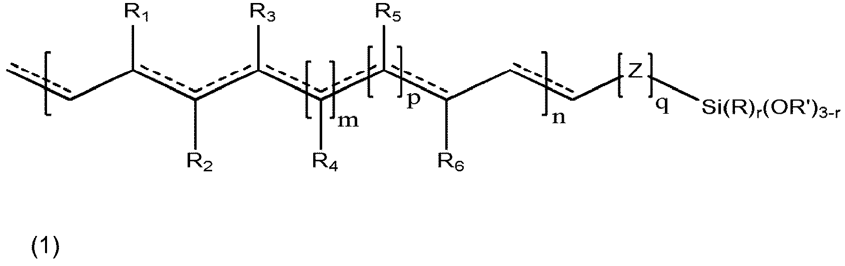 in der:
- jede durch 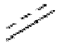 dargestellte Kohlenstoff-Kohlenstoff-Bindung der Kette gemäß den Valenzregeln der organischen Chemie eine Doppelbindung oder eine Einfachbindung ist;
- die Gruppen R₁, R₂, R₃, R₄, R₅ jeweils unabhängig oder nicht unabhängig von den anderen Gruppen für Wasserstoff, eine Halogengruppe, eine Alkoxycarbonylgruppe oder eine Alkylgruppe stehen, wobei die Gruppen R₁ bis R₆ gegebenenfalls als Glieder desselben Rings oder Heterocyclus, der gesättigt oder ungesättigt ist (d. h. mindestens eine Kohlenstoff-Kohlenstoff-Doppelbindung umfasst, einschließlich aromatischer Ringe), miteinander verknüpft sind,
- R₆ unabhängig oder nicht unabhängig von den anderen Gruppen R₁, R₂, R₃, R₄ und R₅ für eine Halogengruppe, eine Alkoxycarbonylgruppe oder eine Alkylgruppe steht,
- m und p ganze Zahlen sind, die jeweils in einem Bereich von 0 bis 5, vorzugsweise von 0 bis 2, liegen und noch weiter bevorzugt m und p beide gleich 1 sind, wobei die Summe m + p wiederum in einem Bereich von 0 bis 10, vorzugsweise von 0 bis 6, liegt,
- R und R', die gleich oder verschieden sind, jeweils für eine lineare oder verzweigte Alkylgruppe mit 1 bis 4 und vorzugsweise 1 bis 2 Kohlenstoffatomen stehen,
- Z für eine zweiwertige Gruppe steht, die aus Alkylengruppen, die durch eine Esterfunktion unterbrochen sind und 1 bis 22 und vorzugsweise 1 bis 6 Kohlenstoffatome enthalten, ausgewählt ist,
- q für eine ganze Zahl mit einem Wert von 0 oder 1 steht,
- r für eine ganze Zahl mit einem Wert von 0, 1 oder 2 steht und
- n für eine solche ganze Zahl steht, dass die zahlenmittlere Molmasse Mn des Kohlenwasserstoffpolymers der Formel (1) in einem Bereich von 400 bis 50.000 g/mol und vorzugsweise von 600 bis 20.000 g/mol liegt und der Polydispersitätsindex (PDI) des Kohlenwasserstoffpolymers der Formel (1) in einem Bereich von 1,0 bis 2,0 und vorzugsweise von 1,25 bis 1,55 liegt.

2. Kohlenwasserstoffpolymer mit einer Alkoxysilan-Endgruppe nach Anspruch 1, wobei die Gruppe der Formel -[Z]_{q}-Si(R)ᵣ(OR')₃₋ᵣ aus -Si(OCH₃)₃; -SiCH₃(OCH₃)₂; -CH₂Si(OCH₃)₃; -CH₂SiCH₃(OCH₃)₂; -CO-O-(CH₂)₃Si(OCH₃)₃) und -CO-O-(CH₂)₃SiCH₃(OCH₃)₂) ausgewählt ist.

3. Kohlenwasserstoffpolymer mit einer Alkoxysilan-Endgruppe nach Anspruch 1 oder 2, wobei das Kohlenwasserstoffpolymer die Formel (1') aufweist:

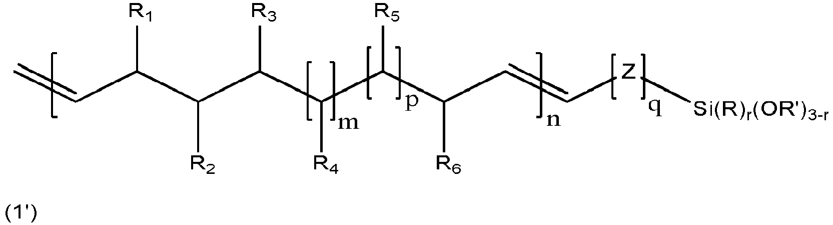

4. Kohlenwasserstoffpolymer mit einer Alkoxysilan-Endgruppe nach Anspruch 1 oder 2, wobei das Kohlenwasserstoffpolymer die Formel (2) oder die Formel (3) aufweist: 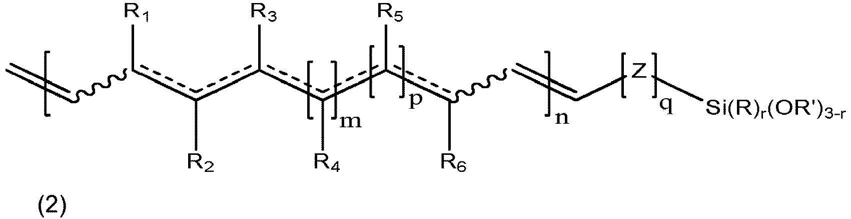 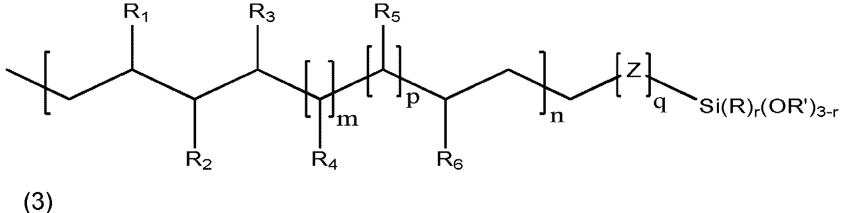 in denen 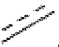 , m, p, q, r, n, Z, R, R', R₁, R₂, R₃, R₄, R₅ und R₆ die in Anspruch 1 angegebenen Bedeutungen haben.

5. Kohlenwasserstoffpolymer mit einer Alkoxysilan-Endgruppe nach Anspruch 1 oder 2, wobei das Kohlenwasserstoffpolymer die Formel (4) aufweist: 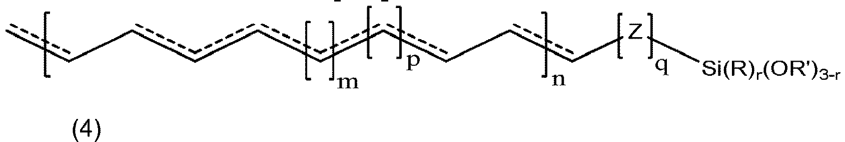 in der 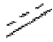 , m, p, q, r, n, Z, R und R' die in Anspruch 1 angegebenen Bedeutungen haben.

6. Kohlenwasserstoffpolymer mit einer Alkoxysilan-Endgruppe nach Anspruch 5, wobei das Kohlenwasserstoffpolymer die Formel (4') aufweist:

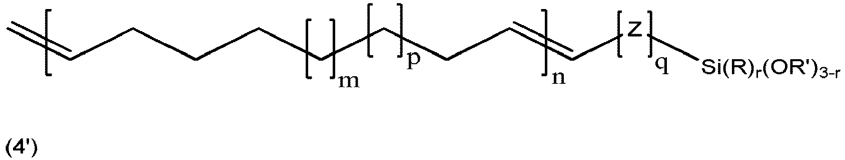

7. Kohlenwasserstoffpolymer mit einer Alkoxysilan-Endgruppe nach Anspruch 5, wobei das Kohlenwasserstoffpolymer die Formel (5) oder die Formel (6) aufweist: 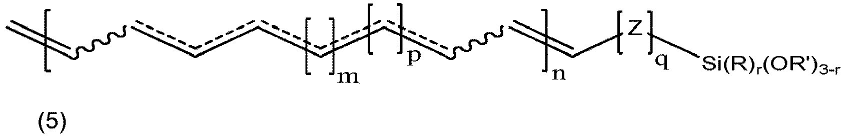 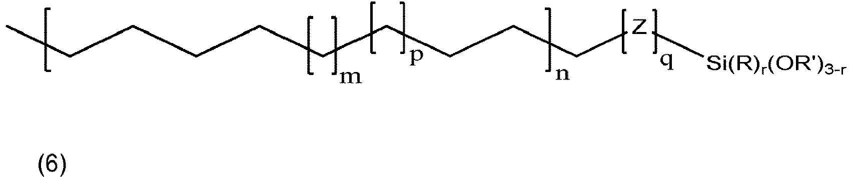 in denen 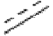 , m, p, q, r, n, Z, R und R' die in Anspruch 1 angegebenen Bedeutungen haben.

8. Verfahren zur Herstellung mindestens eines Kohlenwasserstoffpolymers nach einem der Ansprüche 1 bis 4, wobei das Verfahren mindestens einen Schritt der Ringöffnungs-Metathese-Polymerisation in Gegenwart von:
- mindestens einem Metathese-Katalysator, vorzugsweise einem Katalysator, der Ruthenium umfasst, noch weiter bevorzugt einem Grubbs-Katalysator,
- mindestens einem Kettenübertragungsmittel (CTA) aus der Gruppe der Alkenylsilane mit einer einfach substituierten Kohlenstoff-Kohlenstoff-Doppelbindung, vorzugsweise aus der Gruppe Vinyltrimethoxysilan, Allyltrimethoxysilan und 3-(Trimethoxysilyl)propylacrylat, und
- mindestens einer Verbindung, die aus Verbindungen mit mindestens einem Kohlenwasserstoffring und im Allgemeinen 6 bis 16 und vorzugsweise 6 bis 12 Kohlenstoffatomen pro Ring, wobei der Ring mindestens eine Kohlenstoff-Kohlenstoff-Doppelbindung enthält, und substituierten Derivaten dieser Verbindung ausgewählt ist, wobei die Verbindung die Formel (7) aufweist: 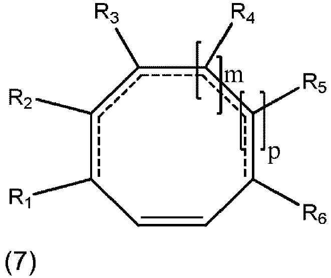 in der:
- jede durch 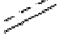 dargestellte Kohlenstoff-Kohlenstoff-Bindung der Kette gemäß den Valenzregeln der organischen Chemie eine Doppelbindung oder eine Einfachbindung ist;
- die Gruppen R₁, R₂, R₃, R₄, R₅ jeweils unabhängig oder nicht unabhängig von den anderen Gruppen für Wasserstoff, eine Halogengruppe, eine Alkoxycarbonylgruppe oder eine Alkylgruppe stehen, wobei die Gruppen R₂ bis R₅ gegebenenfalls als Glieder desselben Rings oder Heterocyclus, der gesättigt oder ungesättigt ist, miteinander verknüpft sind,
- R₆ unabhängig oder nicht unabhängig von den anderen Gruppen R₁, R₂, R₃, R₄ und R₅ für eine Halogengruppe, eine Alkoxycarbonylgruppe oder eine Alkylgruppe steht,
- m und p ganze Zahlen sind, die jeweils in einem Bereich von 0 bis 5, vorzugsweise von 0 bis 2, liegen und noch weiter bevorzugt m und p beide gleich 1 sind, wobei die Summe m + p wiederum in einem Bereich von 0 bis 10, vorzugsweise von 0 bis 6, liegt,
umfasst, wobei der Schritt über einen Zeitraum von weniger als 2 h, vorzugsweise weniger als 30 Minuten, durchgeführt wird, wenn R₁ und R₆ beide gleich H sind; und der Schritt über einen Zeitraum kleiner gleich 30 h durchgeführt wird, wenn mindestens einer der Reste R₁ und R₆ nicht für H steht.

9. Herstellungsverfahren nach Anspruch 8, wobei das Kettenübertragungsmittel die Formel CH₂=CH-[Z]_{q}-Si(R)ᵣ(OR')₃₋ᵣ aufweist, in der:
- R und R', die gleich oder verschieden sind, jeweils für eine lineare oder verzweigte Alkylgruppe mit 1 bis 4 und vorzugsweise 1 bis 2 Kohlenstoffatomen stehen,
- Z für eine zweiwertige Gruppe steht, die aus Alkylengruppen, die durch eine Esterfunktion unterbrochen sind und 1 bis 22 und vorzugsweise 1 bis 6 Kohlenstoffatome enthalten, ausgewählt ist,
- q für eine ganze Zahl mit einem Wert von 0 oder 1 steht und
- r für eine ganze Zahl mit einem Wert von 0, 1 oder 2 steht.

10. Herstellungsverfahren nach Anspruch 8 oder 9, wobei das Kettenübertragungsmittel aus: CH₂=CH-Si(OCH₃)₃; CH₂=CH-SiCH₃(OCH₃)₂; CH₂=CH-CH₂Si(OCH₃)₃; CH₂=CH-CH₂SiCH₃(OCH₃)₂; CH₂=CH-CO-O-(CH₂)₃Si(OCH₃)₃ und CH₂=CH-CO-O-(CH₂)₃SiCH₃(OCH₃)₂ ausgewählt wird.

11. Herstellungsverfahren nach einem der Ansprüche 8 bis 10, wobei das Molverhältnis von CTA zu der Verbindung mit mindestens einem Kohlenwasserstoffring in einem Bereich von 1 bis 10 Mol-% und vorzugsweise von 5 bis 10 Mol-% liegt.

12. Herstellungsverfahren nach einem der Ansprüche 8 bis 11, wobei das Verfahren außerdem mindestens einen zusätzlichen Schritt der Hydrierung von Doppelbindungen umfasst.

13. Herstellungsverfahren nach Anspruch 12, wobei der zusätzliche Hydrierungsschritt durch katalytische Hydrierung unter Wasserstoffdruck und in Gegenwart eines Hydrierkatalysators wie eines auf Kohle geträgerten Palladiumkatalysators (Pd/C) durchgeführt wird.

14. Verwendung mindestens eines Kohlenwasserstoffpolymers nach einem der Ansprüche 1 bis 7 als Haftvermittler.

15. Verwendung mindestens eines Kohlenwasserstoffpolymers nach einem der Ansprüche 1 bis 7 als reaktiver Weichmacher in einer Klebstoffzusammensetzung.

## Claims

1. Hydrocarbon-based polymer bearing an alkoxysilane end group, said hydrocarbon-based polymer being of formula (1): 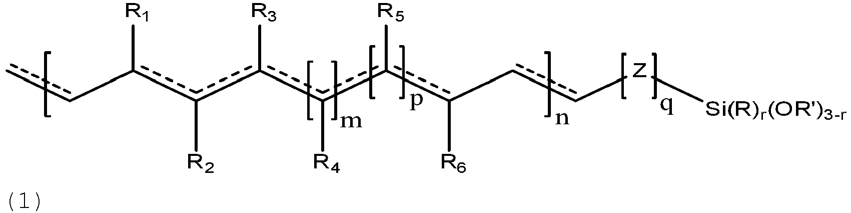 in which:
- each carbon-carbon bond of the chain noted as 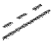 is a double bond or a single bond, in accordance with the valency rules of organic chemistry;
- the groups R1, R2, R3, R4 and R5 are each, independently of the other groups or otherwise, a hydrogen, a halo group, an alkoxycarbonyl group or an alkyl group, the groups R1 to R6 possibly being linked together as members of the same saturated or unsaturated ring or heterocycle (i.e. including at least one carbon-carbon double bond, including aromatic rings),
- R6 is, independently of the other groups R1, R2, R3, R4 and R5 or otherwise, a halo group, an alkoxycarbonyl group or an alkyl group,
- m and p are integers each within a range from 0 to 5, preferably from 0 to 2, and even more preferably m and p are both equal to 1, the sum m + p itself being within a range from 0 to 10, preferably from 0 to 6,
- R and R', which may be identical or different, each represent a linear or branched, preferably linear, alkyl group including from 1 to 4 and preferably from 1 to 2 carbon atoms,
- Z is a divalent group chosen from alkylene groups, optionally interrupted with an ester function, and including from 1 to 22 and preferably from 1 to 6 carbon atoms,
- q is an integer equal to 0 or 1,
- r is an integer equal to 0, 1 or 2, and
- n is an integer such that the number-average molar mass Mn of the hydrocarbon-based polymer of formula (1) is within a range from 400 to 50 000 g/mol, preferably from 600 to 20 000 g/mol, and the polydispersity index (PDI) of the hydrocarbon-based polymer of formula (1) is within a range from 1.0 to 2.0 and preferably from 1.25 to 1.55.

2. Hydrocarbon-based polymer bearing an alkoxysilane end group according to Claim 1, such that the group of formula - [Z]_{q}-Si(R)ᵣ(OR')₃₋ᵣ is chosen from -Si(OCH₃)₃;-SiCH₃(OCH₃)₂; -CH₂Si(OCH₃)₃; -CH₂SiCH₃(OCH₃)₂; -CO-O-(CH₂)₃Si(OCH₃)₃); and -CO-O-(CH₂)₃SiCH₃(OCH₃)₂) .

3. Hydrocarbon-based polymer bearing an alkoxysilane end group according to either of Claims 1 and 2, said hydrocarbon-based polymer being of formula (1'):

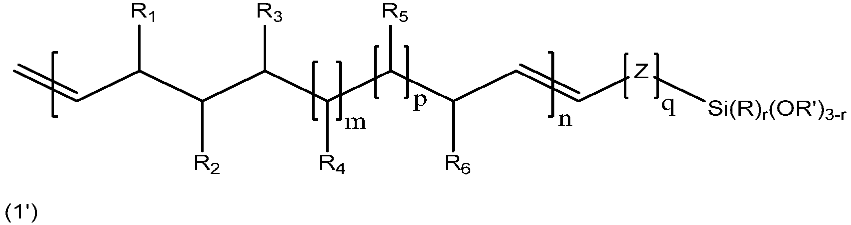

4. Hydrocarbon-based polymer bearing an alkoxysilane end group according to either of Claims 1 and 2, said hydrocarbon-based polymer being of formula (2) or of formula (3): 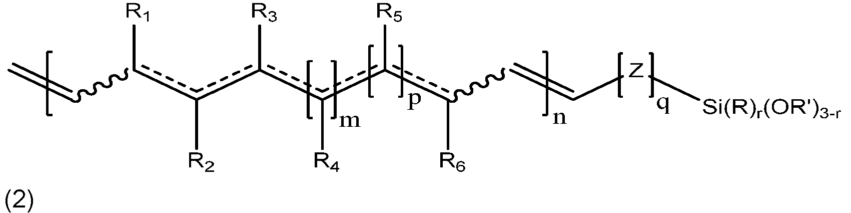 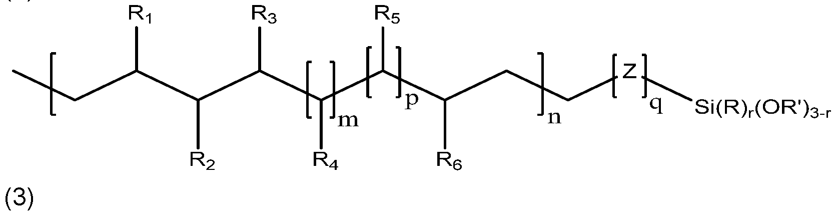 in which 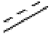 , m, p, q, r, n, Z, R, R', R1, R2, R3, R4, R5 and R6 have the meanings given in Claim 1.

5. Hydrocarbon-based polymer bearing an alkoxysilane end group according to either of Claims 1 and 2, said hydrocarbon-based polymer being of formula (4): 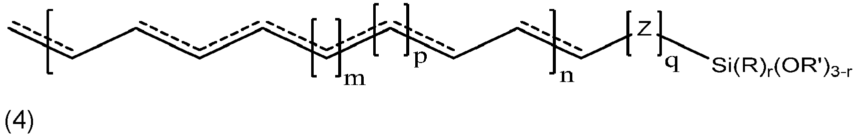 in which 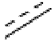 , m, p, q, r, n, Z, R and R' have the meanings given in Claim 1.

6. Hydrocarbon-based polymer bearing an alkoxysilane end group according to Claim 5, said hydrocarbon-based polymer being of formula (4'):

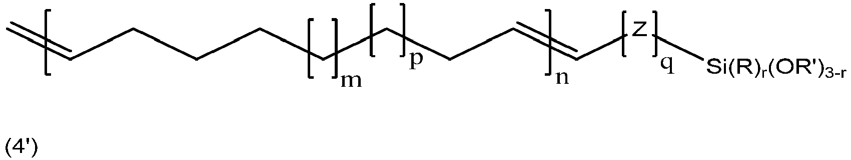

7. Hydrocarbon-based polymer bearing an alkoxysilane end group according to Claim 5, said hydrocarbon-based polymer being of formula (5) or of formula (6): 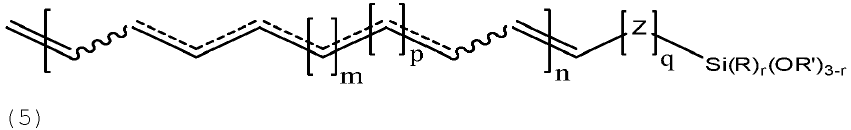 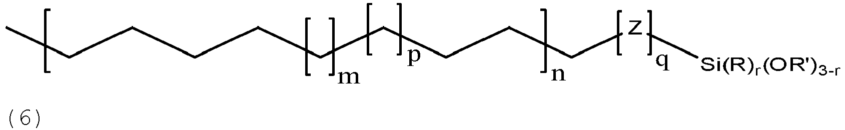 in which 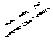 , m, p, q, r, n, Z, R and R' have the meanings given in Claim 1.

8. Process for preparing at least one hydrocarbon-based polymer according to one of Claims 1 to 4, said process comprising at least one step of ring-opening metathesis polymerization in the presence of:
- at least one metathesis catalyst, preferably a catalyst comprising ruthenium, even more preferably a Grubbs catalyst,
- at least one chain-transfer agent (CTA) chosen from the group formed by alkenylsilanes bearing a monosubstituted carbon-carbon double bond, preferably from the group formed by vinyltrimethoxysilane, allyltrimethoxysilane and 3-(trimethoxysilyl)propyl acrylate, and
- at least one compound chosen from compounds comprising at least one hydrocarbon-based ring and generally from 6 to 16 and preferably from 6 to 12 carbon atoms per ring, said ring comprising at least one carbon-carbon double bond, and substituted derivatives of this compound, said compound being of formula (7): 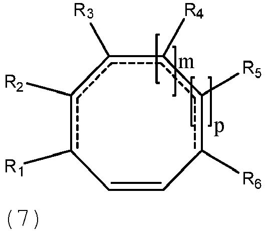 in which
- each carbon-carbon bond of the chain noted as 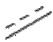 is a double bond or a single bond, in accordance with the valency rules of organic chemistry;
- the groups R1, R2, R3, R4 and R5 are each, independently of the other groups or otherwise, a hydrogen, a halo group, an alkoxycarbonyl group or an alkyl group, the groups R2 to R5 possibly being linked together as members of the same saturated or unsaturated ring or heterocycle,
- R6 is, independently of the other groups R1, R2, R3, R4 and R5 or otherwise, a halo group, an alkoxycarbonyl group or an alkyl group,
- m and p are integers each within a range from 0 to 5, preferably from 0 to 2, and even more preferably m and p are both equal to 1, the sum m + p itself being within a range from 0 to 10, preferably from 0 to 6,
said step being performed for a time of less than 2 hours, preferably less than 30 minutes, when R1 and R6 are both equal to H; and said step being performed for a time of less than or equal to 30 hours when at least one from among R1 and R6 is not H.

9. Preparation process according to Claim 8, such that the chain-transfer agent has the formula CH₂=CH-[Z]_{q}-Si(R)ᵣ(OR')₃₋ᵣ in which:
- R and R', which may be identical or different, each represent a linear or branched, preferably linear, alkyl group including from 1 to 4 and preferably from 1 to 2 carbon atoms,
- Z is a divalent group chosen from alkylene groups, optionally interrupted with an ester function, and including from 1 to 22 and preferably from 1 to 6 carbon atoms,
- q is an integer equal to 0 or 1, and
- r is an integer equal to 0, 1 or 2.

10. Preparation process according to either of Claims 8 and 9, such that the chain-transfer agent is chosen from: CH₂=CH-Si(OCH₃)₃; CH₂=CH-SiCH₃(OCH₃)₂; CH₂=CH-CH₂Si(OCH₃)₃; CH₂=CH-CH₂SiCH₃(OCH₃)₂; CH₂=CH-CO-O-(CH₂)₃Si(OCH₃)₃; and CH₂=CH-CO-O-(CH₂)₃SiCH₃(OCH₃)₂.

11. Preparation process according to one of Claims 8 to 10, said process being such that the mole ratio of the CTA to the compound comprising at least one hydrocarbon-based group is within a range from 1 to 10 mol% and preferably from 5 to 10 mol%.

12. Preparation process according to one of Claims 8 to 11, said process also comprising at least one additional step of hydrogenation of double bonds.

13. Preparation process according to Claim 12, such that the additional hydrogenation step is performed by catalytic hydrogenation, under hydrogen pressure and in the presence of a hydrogenation catalyst such as a palladium catalyst supported on charcoal (Pd/C).

14. Use of at least one hydrocarbon-based polymer according to one of Claims 1 to 7, as an adhesion promoter.

15. Use of at least one hydrocarbon-based polymer according to one of Claims 1 to 7, as a reactive plasticizer in an adhesive composition.
